# EUROPÄISCHE PATENTANMELDUNG

(11) **EP 1 323 579 A2**
(43) Veröffentlichungstag der Anmeldung: **02.07.2003**
(21) Anmeldenummer: 02027112.8
(22) Anmeldetag: 04.12.2002
(51) Int. Cl.: B60Q 1/14

(54) **Verfahren zur Überprüfung einer automatischen Ansteuerung einer Beleuchtungseinrichtung eines Fahrzeuges und Prüfeinrichtung**

(30) Priorität: 24.12.2001 DE 10164083
(71) Anmelder: Hella KG Hueck & Co., 59552 Lippstadt (DE)
(72) Erfinder: Humpohl, Joachim, 59846 Sundern-Hachen (DE)

(57) **Zusammenfassung**

Bei einer automatischen Ansteuerung einer Beleuchtungseinrichtung eines Fahrzeuges werden durch eine Ansteuereinrichtung Signale von Lichtsensoren ausgewertet und die Beleuchtungseinheit über Schaltsignale angesteuert. Zur Überprüfung der Funktionstüchtigkeit ist es bekannt, Ausgangssignale einer Auswerteschaltung der Ansteuerung auf Plausibilität zu überprüfen, indem Testsignale auf die Auswerteschaltung gegeben werden.Zur Erhöhung der Sicherheit soll auch eine Überprüfung der Lichtsensoren ermöglicht werden. Dazu werden die Signale von mindestens zwei Lichtsensoren in Abhängigkeit voneinander geprüft und eine Fehlfunktion des Signals eines ersten Lichtsensors erkannt, wenn als erste Bedingung das Signal des ersten Lichtsensors oberhalb einer höheren Helligkeitsschwelle und das Signal eines zweiten Lichtsensors unterhalb einer tieferen Helligkeitsschwelle liegen und als zweite Bedingung eine Mindestdauer der ersten Bedingung überschritten wird.

## Beschreibung

Die Erfindung betrifft ein Verfahren zur Überprüfung einer automatischen Ansteuerung einer Beleuchtungseinrichtung eines Fahrzeuges gemäß dem Oberbegriff des Anspruchs 1 und eine Prüfeinrichtung gemäß dem Oberbegriff des Anspruchs 6.

Bei einer automatischen Ansteuerung einer Beleuchtungseinrichtung eines Fahrzeuges ist es wichtig, die Funktionstüchtigkeit der Ansteuerung zu überprüfen. Zur automatischen Ansteuerung werden durch eine Ansteuereinrichtung Signale von Lichtsensoren ausgewertet und die Beleuchtungseinrichtung über Schaltsignale angesteuert.

Eine Einrichtung zur automatischen Schaltung von Beleuchtungseinrichtungen bei Fahrzeugen mit einer Sensoreinrichtung ist aus der DE 195 23 262 A1 bekannt. Dabei ist eine Sensoreinrichtung vorgesehen, welche einen Globalsensor für die Erfassung der allgemeinen Lichtverhältnisse in der Umgebung des Fahrzeuges und einen Richtungssensor für die gerichtete Erfassung der Lichtverhältnisse in Fahrtrichtung vor dem Fahrzeug umfasst. Aus den Signalen der Sensoreinrichtung wird ermittelt, ob eine Änderung des Schaltzustandes erforderlich ist.

Eine weitere fahrsituationsabhängige Lichtsteuerung mit einem Umgebungslichtsensor und einem fahrtrichtungsspezifischem Lichtsensor ist aus der DE 196 30 216 A1 bekannt.

Bei keiner der beiden genannten automatischen Ansteuerungen von Beleuchtungseinrichtungen eines Fahrzeuges ist eine Überprüfung der Funktionsfähigkeit der Ansteuerung bekannt.

Ein gattungsgemäßes Verfahren und eine gattungsgemäße Prüfeinrichtung zur Überprüfung einer Auswerteschaltung einer automatischen Schaltung für Beleuchtungseinrichtungen bei Fahrzeugen sind in der EP 1 134 119 A2 beschrieben. Die EP 1 134 119 A2 bezieht sich auf die DE 195 23 262 A1, aus der die vorgesehene Sensoreinrichtung mit einem Globalsensor und einem Richtungssensor, die Auswerteschaltung und die Funktionweise, wie erwähnt, hervorgehen. Zur Überprüfung der Funktionstüchtigkeit der Auswerteschaltung werden Plausibilitätschecks ihres Ausgangssignals eingesetzt. Dazu wird beispielsweise im eingeschalteten Zustand die Spannungszuführung zur Sensoreinrichtung kurzzeitig unterbrochen und überprüft, ob das Ausgangssignal dem simulierten Zustand "Nacht" entspricht. Falls dies nicht der Fall ist, d.h. bei nicht richtiger Funktionsweise der Auswerteschaltung, wird ein Signal erzeugt, durch das auf die Fehlfunktion hingewiesen und die Einleitung weiterer Schritte veranlasst wird. Einer dieser Schritte kann eine Ansteuerung der Beleuchtungseinrichtung sein, die zum automatischen Einschalten des Abblendlichtes führt. Ein weiterer Schritt kann eine Information des Fahrers über die Fehlfunktion der Auswerteschaltung sein.

Neben dem Ausfall einer Ansteuereinrichtung, wie in der EP 1 134 119 A2 beschriebenen Auswerteeinrichtung, ist auch der Ausfall eines der Lichtsensoren sicherheitskritisch. Ein ständiges Überprüfen im eingeschalteten Zustand durch ein Testsignal, wie dies für die Überprüfung der Funktionsweise der Auswerteschaltung in der EP 1 134 119 A2 vorgeschlagen wird, ist zur Überprüfung der Funktionsweise der Lichtsensoren nicht möglich.

Aufgabe der Erfindung ist es, ein Verfahren zur Überprüfung einer automatischen Ansteuerung einer Beleuchtungseinrichtung eines Fahrzeuges gemäß dem Oberbegriff des Anspruchs 1 und eine entsprechende Prüfeinrichtung gemäß dem Oberbegriff des Anspruchs 6 zu entwickeln, wobei eine Überprüfung der Signale der Lichtsensoren ermöglicht und damit die Sicherheit der automatischen Ansteuerung erhöht wird.

Die Aufgabe ist durch die kennzeichnenden Merkmale der Ansprüche 1 und 6 erfüllt.

Erfindungsgemäß werden bei der Überprüfung die Signale von mindestens zwei Lichtsensoren in Abhängigkeit voneinander geprüft. Bei der Überprüfung der Lichtsensoren kann man sich zunutze machen, dass die Signale zweier Lichtsensoren eine gewisse Abhängigkeit voneinander haben. So können z.B. Signale eines Umgebungslichtsensors (Globalsensors) und eines Vorfeldsensors (Richtungssensors) zu einem bestimmten Zeitpunkt unterschiedliche Helligkeitswerte aufweisen. Ihr zeitlicher Verlauf ist, wie z.B. in der DE 195 23 262 A1 gezeigt, jedoch bis auf eine zeitliche Verschiebung ähnlich. Dies gilt z.B. für eine Einfahrt in oder eine Ausfahrt aus einem Tunnel. Abweichende Verläufe der Signale können auf eine Fehlfunktion eines der Lichtsensoren hinweisen.

Es können auch die Signale von mehr als zwei Lichtsensoren in Abhängigkeit voneinander geprüft werden, wobei die Signale je zweier Lichtsensoren miteinander verglichen werden. Eine Vorrichtung zum automatischen Ein- und Ausschalten der Beleuchtung eines Fahrzeuges mit drei Lichtsensoren ist z.B. aus der DE 199 57 210 A1 bekannt.

Bei einer erfindungsgemäßen Überprüfung der Signale zweier Lichtsensoren wird eine Fehlfunktion des Signals eines ersten Lichtsensors erkannt, wenn als erste Bedingung das Signal des ersten Lichtsensors oberhalb einer höheren Helligkeitsschwelle und das Signal eines zweiten Lichtsensors unterhalb einer tieferen Helligkeitsschwelle liegen und als zweite Bedingung eine Mindestdauer der ersten Bedingung überschritten wird. Diese Überprüfung beruht darauf, dass bei zwei Lichtsensoren an einem fahrenden Fahrzeug das Signal eines ersten Lichtsensor einen niedrigen Helligkeitswert anzeigen müsste, wenn dies ein zweiter Lichtsensor bereits während einer Mindestdauer, d.h. eine bestimmte Zeit lang oder nach Zurücklegen eines bestimmten Weges angezeigt hat. Ist dies nicht der Fall, sondern liegt das Signal des ersten Lichtsensors andauernd wesentlich höher, so kann der erste Lichtsensor defekt sein. Bei defektem Lichtsensor wird ein Signal ausgesandt, das höchster Helligkeit entspricht.

Das Überschreiten einer Mindestdauer der Abweichung der Signale der beiden Lichtsensoren kann über eine vorgegebene Mindestzeit T oder eine vorgegebenen Mindeststrecke X, die das Fahrzeug zurückgelegt hat und die berechnet oder durch einen Wegsensor gemessen werden kann, ermittelt werden.
Bei Erkennen einer Fehlfunktion wird die Beleuchtungseinrichtung angesteuert.

Damit ist eine sicherheitskritische Fehlfunktion der Ansteuerung, nämlich ggf. ein fehlendes Einschalten der Beleuchtungseinrichtung bei Ausfall eines Lichtsensors, behoben.

Die Überprüfung kann anhand von direkt von den Lichtsensoren ausgesandten Signalen oder anhand von bereits in einer Auswerteeinrichtung geglätteten Signalen erfolgen. Bei geglätteten Signalen kann das Erkennen einer Fehlfunktion auch auf eine Fehlfunktion der Auswerteeinrichtung hinweisen.

Bevorzugt wird gemäß Anspruch 2 zur Überprüfung der Ansteuerung untersucht, ob das Signal des zweiten Lichtsensors unterhalb der Einschaltschwelle SW I und das Signal des ersten Lichtsensors oberhalb der Ausschaltschwelle SW II liegen, so dass zur Ansteuerung der Beleuchtungseinrichtung direkt ein Schaltsignal "Einschalten" ausgegeben werden kann.

Bevorzugt ist gemäß Anspruch 3 einer der beiden Lichtsensoren ein Umgebungslichtsensor und der andere Lichtsensor ein Vorfeldsensor.

Bei Ausfall des Umgebungslichtsensors, d.h. einem Signal des Umgebungslichtsensors oberhalb der Ausschaltschwelle SW II und bei einem Signal des Vorfeldsensors unterhalb der Einschaltschwelle SW I über eine Mindestdauer wird die Beleuchtungseinrichtung eingeschaltet. Die Mindestdauer ist so gewählt, dass z.B. bei einer Annäherung an einen Tunnel keine Fehlfunktion erkannt wird.

Bei Ausfall des Vorfeldsensors, d.h. einem Signal des Vorfeldsensors oberhalb der Ausschaltschwelle SW II, und bei einem Signal des Umgebungslichtsensors unterhalb der Einschaltschwelle SW I über eine Mindestzeit T oder über eine Mindeststrecke X wird die Beleuchtungseinrichtung eingeschaltet. Die Mindestdauer, d.h. die Mindestzeit T oder die Mindeststrecke X sind so gewählt, dass bei einer Ausfahrt aus einem Tunnel oder einer Durchfahrt unter einer Straßenunterführung keine Fehlfunktion erkannt wird.

Als Fehlfunktion des Vorfeldsensors wird auch erkannt, wenn der Umgebungslichtsensor ständig durch Dachüberbauten, z.B. durch einen Skikoffer oder ein Surfbrett, abgeschattet und sein Signal unterhalb der Einschaltschwelle SW I ist und das Signal des Vorfeldsensors während der Mindestdauer oberhalb der Ausschaltschwelle SW II liegt, z.B. während einer Tagfahrt. Auch diese Konstellation führt zum Einschalten der Beleuchtungseinrichtung.

Zur Erkennung einer Fehlfunktion des Umgebungslichtsensors kann gemäß Anspruch 4 als zusätzliche Bedingung das Überschreiten einer Mindestgeschwindigkeit V oder einer zweiten, längeren Mindestdauer, z.B. einer Mindestdauer T2 oder einer Mindeststrecke X2, der ersten Bedingung gewählt werden. Damit können Einpark- und Ausparksituationen, bei denen die erste Mindestdauer, Mindestzeit T oder Mindeststrecke X, überschritten wird, ausgeschlossen werden. Bei Parksituationen könnte der Vorfeldsensor durch eine dunkle Hauswand oder Garageneinfahrt abgeschattet sein und sein Signal im Verhältnis zu dem des Umgebungslichtsensors zu niedrig sein.

Falls eine Parksituation aufgrund einer Mindestgeschwindigkeit V oder einer Mindestzeit T 2 ausgeschlossen werden kann, kann gemäß Anspruch 5 bei Erkennen einer Fehlfunktion des Umgebungslichtsensors eine Fehlermeldung an ein Diagnosegerät ausgegeben werden.

Eine Fehlermeldung bei Erkennen einer Fehlfunktion des Vorfeldsensors sollte nicht erfolgen, da, wie beschrieben, die Möglichkeit besteht, dass sie aufgrund einer Abschattung des Umgebungslichtsensors durch Dachüberbauten erfolgt ist.

Eine erfindungsgemäße Prüfeinrichtung zur Überprüfung einer automatischen Ansteuerung einer Beleuchtungseinrichtung eines Fahrzeuges gemäß Anspruch 6 ist zur Durchführung eines Verfahren nach Anspruch 1, und Prüfeinrichtungen gemäß der Ansprüche 7 bis 10 sind zur Durchführung von Verfahren nach den Ansprüche 2 bis 5 besonders gut geeignet.

Die erfindungsgemäße Prüfeinrichtung kann in die Ansteuereinrichtung integriert sein. Die Ansteuereinrichtung kann als Mikrocontroller ausgebildet sein, der einen Mikroprozessor sowie weitere Bauteile, z.B. einen Analog/Digitalwandler umfassen kann.

Die Erfindung wird anhand von in der Zeichnung schematisch dargestellten Ausführungsbeispielen weiter erläutert.

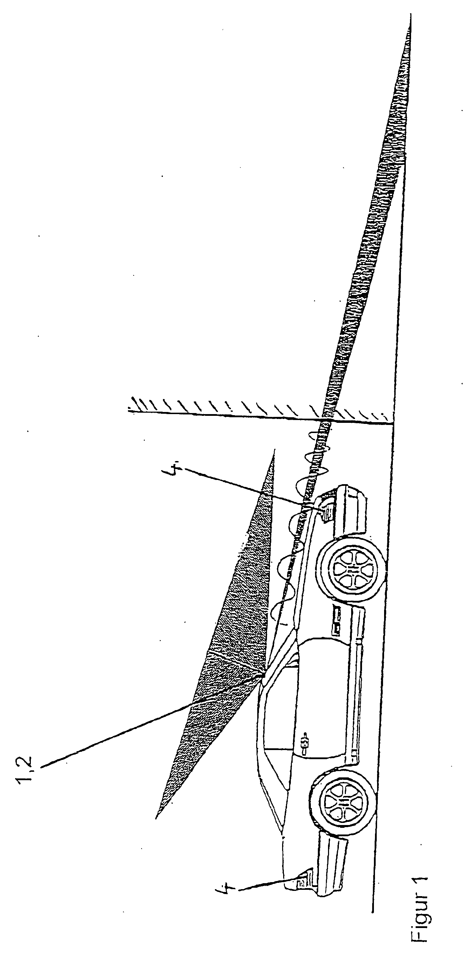

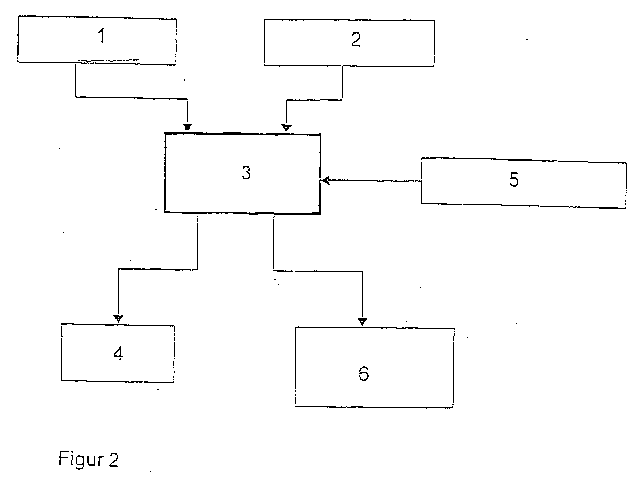

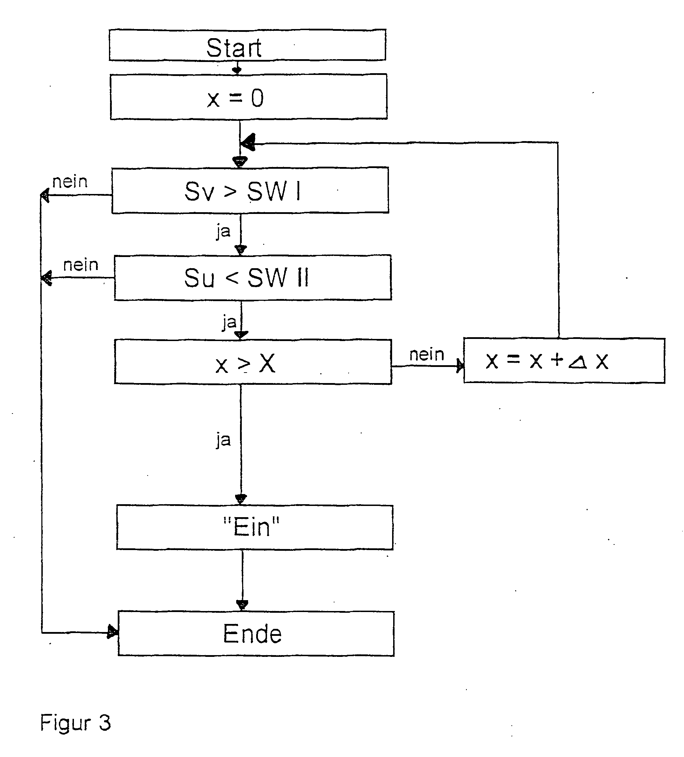

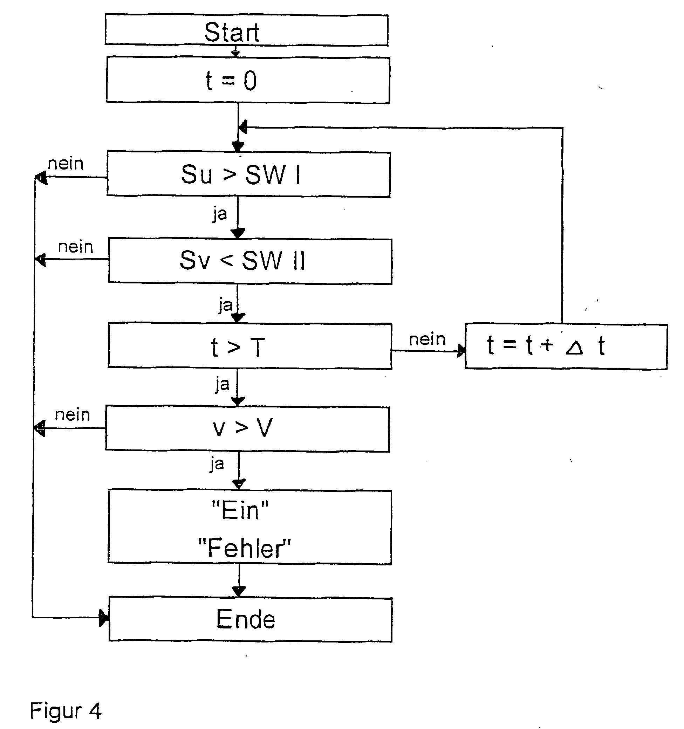

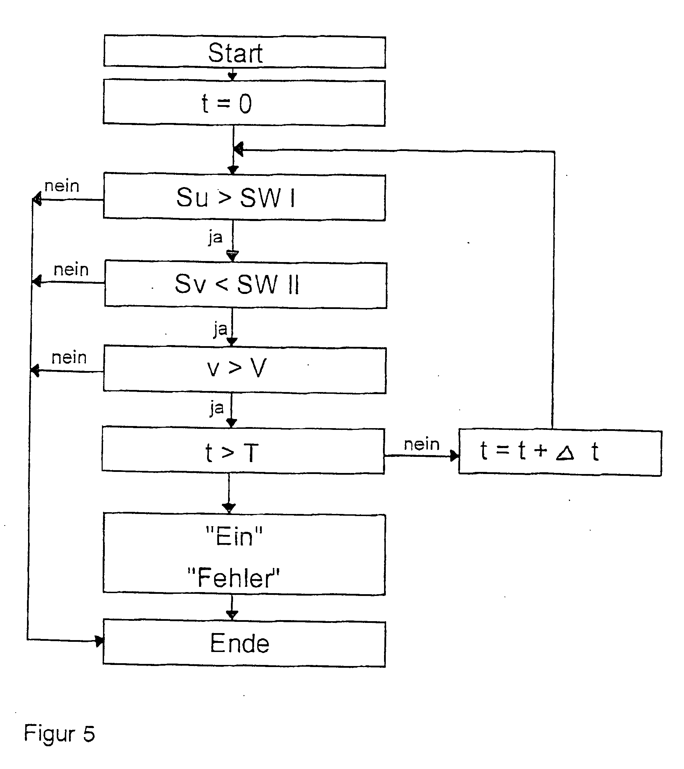

Figur 1 zeigt ein Fahrzeug mit Lichtsensoren und Figur 2 ein Blockschaltbild der erfindungsgemäßen Prüfeinrichtung. In den Figuren 3 bis 5 sind Ablaufdiagramme erfindungsgemäßer Verfahren zur Erkennung einer Fehlfunktion eines Vorfeldsensors (Figur 3) und eines Umfeldgebungslichtsensors (Figuren 4 und 5) dargestellt.

Eine erfindungsgemäße Prüfeinrichtung wird zur Überprüfung einer Ansteuereinrichtung zur automatischen Ansteuerung einer Beleuchtungseinrichtung eines Fahrzeuges eingesetzt.

Die Ansteuereinrichtung umfaßt eine Sensoreinrichtung mit zwei Lichtsensoren, und zwar mit einem Umgebungslichtsensor 1 und einem Vorfeldsensor 2, und eine Auswerteeinrichtung 3. Der Umgebungslichtsensor 1 und der Vorfeldsensor 2 sind zur Übergabe ihrer Sensorsignale Su und Sv an die Auswerteeinrichtung 3 angeschlossen und diese zur Übergabe eines Schaltsignals an die Beleuchtungseinrichtung 4 (Figur 2).

Die beiden Lichtsensoren sind als Fotozellen ausgebildet und z.B. oben an einer Windschutzscheibe angebracht (Figur 1). Die Beleuchtungseinrichtung 4 kann Einrichtungen am Fahrzeug, wie das Abblendlicht, und eine Innenraumbeleuchtung umfassen.

Die Prüfeinrichtung eines ersten Beispiels ist als Teil der Auswerteeinrichtung 3 ausgebildet, wobei der Umgebungslichtsensor 1 und der Vorfeldsensor 2 zur Übergabe ihrer Signale Su und Sv sowie ein Fahrgeschwindigkeitssensor 5 zur Übergabe eines Geschwindigkeitssignals v an die Prüfeinrichtung angeschlossen sind und die Prüfeinrichtung zur Übergabe eines Schaltsignals an die Beleuchtungseinrichtung 4 und zur Übergabe einer Fehlermeldung an ein Diagnosegerät 6 angeschlossen ist. Die Auswerteeinrichtung 3 kann als Mikrocontroller ausgebildet sein.

Die Prüfeinrichtung des ersten Beispiels weist eine Vergleichseinheit, in der eine Einschaltschwelle SW I und eine Ausschaltschwelle SW II gespeichert sind, eine Verzögerungseinheit, in der eine Mindeststrecke X gespeichert ist, und eine zweite Vergleichseinheit, in der eine Mindestgeschwindigkeit V gespeichert ist, auf.

Bei einem zweiten Beispiel der Prüfeinrichtung ist in der Verzögerungseinheit zur Ermittlung der Mindestdauer statt der Mindeststrecke X eine Mindestzeit T gespeichert.

Bei weiteren Beispielen der Prüfeinrichtung ist statt der zweiten Vergleichseinheit eine zweite Verzögerungseinheit mit einer Mindesteit T2 oder mit einer Mindeststrecke X2 vorgesehen

Im Auswerteteil der Auswerteeinrichtung 3 werden die Sensorsignale Su und Sv des Umgebungslichtsensors 1 und des Vorfeldsensors 2 ausgewertet und die Beleuchtungseinrichtung 4 angesteuert. Die Beleuchtungseinrichtung 4 wird je nach Ergebnis der Auswertung der Sensorsignale Su und Sv ein- oder ausgeschaltet oder unverändert gelassen.

Zusätzlich werden zur Überprüfung der Ansteuerung durch die Prüfeinrichtung der Auswerteeinrichtung 3 die beiden Sensorsignale Su und Sv in Abhängigkeit voneinander auf Plausibilität geprüft und bei Erkennen einer Fehlfunktion die Beleuchtungseinrichtung 4 angesteuert. Die Plausibilitätsprüfungen werden im Betrieb, z.B. bei laufendem Motor ständig neu gestartet.

Bei einer Plausibilitätsprüfung des Sensorsignals Sv des Vorfeldsensors 2 gemäß Figur 3 durch die Prüfeinrichtung des ersten Beispiels wird beim Start der Prüfung ein Wegzähler auf x gleich 0 gesetzt. In der Vergleichseinheit der Prüfeinrichtung wird als erste Bedingung geprüft, ob das Signal Sv des Vorfeldsensors 2 oberhalb der Ausschaltschwelle SW II und das Signal Su des Umgebungslichtsensors 1 unterhalb der Einschaltschwelle SW I liegen. Falls ja, wird in der Verzögerungseinheit der Prüfeinrichtung als zweite Bedingung geprüft, ob der zurückgelegte Weg x größer ist als der Mindestweg X. Falls nein, wird der Wert des zurückgelegten Weges x um einen dem Prüfintervall entsprechenden Betrag Δx erhöht und die Prüfung erneut durchgeführt.

Falls ja, wird eine Fehlfunktion des Vorfeldsensors 2 erkannt und die Beleuchtungseinrichtung 4 durch ein Schaltsignal "ein" angesteuert und eingeschaltet. Der zurückgelegte Weg x kann aus der gemessenen Geschwindigkeit v und der Zeit t berechnet oder durch einen Wegsensor übermittelt werden. Wie bereits erwähnt, kann in einer Prüfeinrichtung des zweiten Beispiels als zweite Bedingung alternativ geprüft werden, ob die verstrichene Zeit t größer ist als eine Mindestzeit T.

Bei einer Plausibilitätsprüfung des Sensorsignals Su des Umgebungslichtsensors 1 gemäß Figur 4 durch eine Prüfeinheit des zweiten Beispiels wird beim Start der Prüfung ein Zeitzähler auf t gleich 0 gesetzt. In der Vergleichseinheit der Prüfeinrichtung wird als erste Bedingung geprüft, ob das Signal Su des Umgebungslichtsensors 1 oberhalb der Ausschaltschwelle SW II und das Signal Sv des Vorfeldsensors unterhalb der Einschaltschwelle SW I liegen. Falls ja, wird in der Verzögerungseinheit der Prüfeinrichtung als zweite Bedingung geprüft, ob die verstrichene Zeit t größer ist als die Mindestzeit T. Falls nein, wird der Wert der verstrichenen Zeit t um einen dem Prüfintervall entsprechenden BetragΔt erhöht und die Prüfung erneut durchgeführt. Falls ja, wird in der zweiten Vergleichseinheit der Prüfungseinheit als dritte Bedingung geprüft, ob die von dem Fahrgeschwindigkeitssensor 5 gemessene Geschwindigkeit v größer ist als die Mindestgeschwindigkeit V. Falls nein, wird die Prüfung aller Bedingungen erneut durchgeführt. Falls ja, wird eine Fehlfunktion des Umgebungslichtsensors 1 erkannt und die Beleuchtungseinrichtung 4 durch ein Schaltsignal "ein" angesteuert und eingeschaltet. Zusätzlich wird eine Fehlermeldung an die Diagnoseeinheit 6 ausgegeben. In der Prüfungseinheit sind in diesem Beispiel die erste Vergleichseinheit, die Verzögerungseinheit und die zweite Vergleichseinheit in dieser Reihenfolge hintereinander geschaltet.

Bei einer alternativen Prüfung des Sensorsignals Su des Umgebungslichtsensors 1 gemäß Figur 5 wird nach Prüfung der ersten Bedingung zunächst die dritte Bedingung, nämlich das Überschreiten einer Mindestgeschwindigkeit V, und anschließend die zweite Bedingung geprüft. In diesem Beispiel ist in der Prüfeinrichtung die zweite Vergleichseinheit vor die Verzögerungseinheit geschaltet.

Alternativ kann bei der Prüfung des Sensorsignals Su des Umgebungslichtsensors 1 als dritte Bedingung auch in einer zweiten Verzögerungseinheit der Prüfungseinrichtung das Überschreiten einer zweiten, längeren Mindestdauer geprüft werden. Als Mindestdauer kann eine Mindestzeit T2, die länger ist als die Mindestzeit T oder eine Mindeststrecke X2, die länger ist als die Mindeststrecke X, eingesetzt werden.

### Bezugszeichenliste

- 1: Umgebungslichtsensor
- 2: Vorfeldsensor
- 3: Auswerteeinrichtung
- 4: Beleuchtungseinrichtung
- 5: Fahrgeschwindigkeitssensor
- 6: Diagnosegerät

## Patentansprüche

1. Verfahren zur Überprüfung einer automatischen Ansteuerung einer Beleuchtungseinrichtung eines Fahrzeuges, wobei bei der Ansteuerung Signale von Lichtsensoren ausgewertet und die Beleuchtungseinrichtung angesteuert werden, und wobei bei der Überprüfung bei Erkennen einer Fehlfunktion ebenfalls die Beleuchtungseinrichtung angesteuert wird,
**dadurch gekennzeichnet, dass**
die Signale von mindestens zwei Lichtsensoren in Abhängigkeit voneinander geprüft werden und
eine Fehlfunktion des Signals eines ersten Lichtsensors erkannt wird,
wenn als erste Bedingung das Signal des ersten Lichtsensors oberhalb einer höheren Helligkeitsschwelle und das Signal eines zweiten Lichtsensors unterhalb einer tieferen Helligkeitsschwelle liegen und
als zweite Bedingung eine Mindestdauer der ersten Bedingung überschritten wird.

2. Verfahren nach Anspruch 1, **dadurch gekennzeichnet, dass**
als höhere Helligkeitsschwelle eine Ausschaltschwelle SW II und als tiefere Helligkeitsschwelle eine Einschaltschwelle SW I eingesetzt werden.

3. Verfahren nach Anspruch 1 oder Anspruch 2, **dadurch gekennzeichnet, dass** die Signale eines Umgebungslichtsensors (1) und eines Vorfeldsensors (2) in Abhängigkeit voneinander geprüft werden.

4. Verfahren nach Anspruch 3 und nach Anspruch 2, **dadurch gekennzeichnet, dass** eine Fehlfunktion des Umgebungslichtsensors (1) erkannt wird, wenn als zusätzliche Bedingung eine Mindestgeschwindigkeit V oder eine zweite, längere Mindestdauer der ersten Bedingung überschritten wird.

5. Verfahren nach Anspruch 4, **dadurch gekennzeichnet, dass** bei Erkennen einer Fehlfunktion des Umgebungslichtsensors (1) eine Fehlermeldung an ein Diagnosegerät (6) ausgegeben wird.

6. Prüfeinrichtung zur Überprüfung einer Ansteuereinrichtung zur automatischen Ansteuerung einer Beleuchtungseinrichtung eines Fahrzeuges, wobei an die Ansteuereinrichtung Lichtsensoren angeschlossen sind und die Ansteuereinrichtung an die Beleuchtungseinrichtung angeschlossen ist, und wobei die Prüfeinrichtung ebenfalls an die Beleuchtungseinrichtung angeschlossen ist,
**dadurch gekennzeichnet, dass**
die Lichtsensoren zusätzlich an die Prüfeinrichtung angeschlossen sind und
die Prüfeinrichtung eine Vergleichseinheit mit einer höheren Helligkeitsschwelle und mit einer niedrigeren Helligkeitsschwelle und eine Verzögerungseinheit aufweist.

7. Prüfeinrichtung nach Anspruch 6, **gekennzeichnet durch** eine Vergleichseinheit mit einer Einschaltschwelle SW I und einer Ausschaltschwelle SW II.

8. Prüfeinrichtung nach Anspruch 6 oder Anspruch 7, **dadurch gekennzeichnet, dass** die Lichtsensoren als Umgebungslichtsensor (1) und als Vorfeldsensor (2) ausgebildet sind.

9. Prüfeinrichtung nach einem der Ansprüche 6 bis 8, **dadurch gekennzeichnet, dass** ein Fahrgeschwindigkeitssensor (5) an die Prüfeinrichtung angeschlossen ist.

10. Prüfeinrichtung nach einem der Ansprüche 6 bis 9, **dadurch gekennzeichnet, dass** die Prüfeinrichtung an ein Diagnosegerät (6) angeschlossen ist.
